# DEMANDE DE BREVET EUROPEEN

(11) **EP 4 659 885 A1**
(43) Date de publication de la demande: **10.12.2025**
(21) Numéro de dépôt: 24315268.3
(22) Date de dépôt: 03.06.2024
(51) Int. Cl.: B23D 47/12, B28D 1/04, B28D 1/18, B28D 1/22, B28D 1/24

(54) **RAINUREUSE**

(71) Demandeur: Illinois Tool Works Inc., Glenview, IL 60025 (US)
(72) Inventeur: Perrier, Matthieu, Glenview, IL Illinois 60025 (US); Tournier, Ludovic, Glenview, IL Illinois 60025 (US); Simonin, Jean-Luc, Glenview, IL Illinois 60025 (US)
(74) Mandataire: HGF

(57) **Abrégé**

L'invention concerne une rainureuse (1) comprenant une paire de disques de coupe espacés (10) pour couper une rainure dans un substrat, un moteur sans balais (5) pour entraîner les disques de coupe (10), un convertisseur de puissance (6) et un cordon d'alimentation (7) configuré pour connecter le moteur sans balais (5) à une alimentation CA externe par l'intermédiaire du convertisseur de puissance (6).

## Description

### Domaine technique de l'invention

La présente invention concerne de manière générale les rainureuses, et en particulier les rainureuses pour la réalisation de fentes, saignées ou évidements muraux ou au niveau du sol.

### Arrière-plan technique

Une telle rainureuse peut être utilisée pour réaliser des fentes, rainures ou évidements dans la maçonnerie, par exemple dans des murs en plâtre, en brique ou en béton, dans des murs silico-calcaires ou dans n'importe quelle surface.

Dans le cadre d'une installation électrique domestique, il est régulièrement nécessaire de réaliser des fentes, des rainures ou des évidements similaires dans la maçonnerie, lorsque des câbles ou des conduits électriques doivent être posés sous le plâtre. De même, de tels renfoncements sont souvent nécessaires lors de l'installation de tuyaux de plomberie.

Les rainureuses connues comprennent généralement une paire de poignées fixées chacune à leur extrémité à un corps principal. Celles-ci peuvent être parallèles ou perpendiculaires l'une à l'autre. L'homme du métier comprendra que chaque type de poignée offre des avantages pour la manipulation de la rainureuse dans des orientations horizontales et/ou verticales.

### Résumé de l'invention

Un objectif non exclusif de la présente invention est de fournir une rainureuse qui peut être utilisée plus facilement dans de multiples orientations différentes.

L'invention concerne une rainureuse comprenant un moteur sans balais, par exemple pour l'entraînement d'un disque de coupe.

La rainureuse peut comprendre un moteur sans balais pour l'entraînement d'une paire de disques de coupe, par exemple au moins deux disques de coupe.

La rainureuse peut comprendre un disque de coupe, par exemple pour couper une rainure dans un substrat. La rainureuse peut comprendre une surface d'engagement, par exemple pour l'engagement d'un substrat à rainurer. Le disque de coupe peut faire saillie de la surface d'engagement.

La rainureuse peut comprendre une paire de disques de coupe ou au moins deux disques de coupe, par exemple pour couper une rainure dans un substrat. Les disques de coupe peuvent être espacés.

Le ou chaque disque de coupe peut être relié de manière opérationnelle au moteur pour être entraîné par celui-ci.

La rainureuse peut comprendre un convertisseur de puissance. La rainureuse peut comprendre un cordon d'alimentation. Le cordon d'alimentation peut être configuré pour connecter le moteur sans balais à une alimentation CA externe, par exemple par l'intermédiaire du convertisseur de puissance.

L'invention concerne également une rainureuse comprenant une paire de disques de coupe espacés pour couper une rainure dans un substrat, un moteur sans balais pour entraîner les disques de coupe, un convertisseur de puissance et un cordon d'alimentation configuré pour connecter le moteur sans balais à une alimentation CA externe par l'intermédiaire du convertisseur de puissance.

La rainureuse peut comprendre un corps principal. La rainureuse peut comprendre une poignée, qui peut être fixée au corps principal. Les disques de coupe peuvent faire saillie de la surface d'engagement.

La poignée peut comprendre une portion de préhension. La portion de préhension peut être sensiblement parallèle à une direction de rainurage du corps. Le moteur sans balais peut se trouver entre la portion de préhension et la surface d'engagement.

Plus précisément, la rainureuse peut comprendre un corps principal, une poignée fixée au corps principal et une surface d'engagement pour l'engagement d'un substrat à rainurer, dans laquelle les disques de coupe font saillie de la surface. d'engagement, la poignée comprend une portion de préhension qui est sensiblement parallèle à une direction de rainurage du corps et le moteur sans balais se trouve entre la portion de préhension et la surface d'engagement.

Le moteur peut avoir un axe central éloigné de la surface d'engagement d'une première distance. La poignée, par exemple la portion de préhension, peut avoir une portion centrale éloignée de l'axe central d'une deuxième distance. La deuxième distance peut être au moins 50% plus grande que la première distance.

Plus précisément, le moteur peut avoir un axe central éloigné de la surface d'engagement d'une première distance et la portion de préhension qui est sensiblement parallèle à la direction de rainurage du corps a une portion centrale éloignée de l'axe central d'une deuxième distance qui est au moins 50% plus grande que la première distance.

L'invention concerne également une rainureuse comprenant un corps principal, une poignée avec une portion de préhension s'étendant le long d'une direction de rainurage du corps, un moteur pour entraîner un disque de coupe et une surface d'engagement pour engager un substrat à rainurer, dans lequel le moteur a un axe central éloigné de la surface d'engagement d'une première distance et la portion de préhension a une portion centrale éloignée de l'axe central d'une deuxième distance qui est au moins 50% plus grande que la première distance.

La deuxième distance peut être au moins 75% plus grande que la première distance.

Plus précisément, le moteur peut avoir un axe central éloigné de la surface d'engagement d'une première distance, la portion de préhension ayant une portion centrale éloignée de l'axe central d'une deuxième distance qui est au moins 75% plus grande que la première distance.

La deuxième distance peut être environ le double, ou au moins le double, de la première distance.

La deuxième distance peut être environ au moins le double de la première distance.

La portion de préhension qui est sensiblement parallèle à la direction de rainurage du corps peut converger vers la surface d'engagement.

La partie de la portion de préhension la plus proche de l'axe central peut être éloignée de celui-ci d'une troisième distance. La troisième distance peut être au moins 25% plus grande que la première distance.

Plus précisément, la partie de la portion de préhension la plus proche de l'axe central est éloignée de celui-ci d'une troisième distance qui est au moins 25% plus grande que la première distance.

La troisième distance peut être au moins 40% plus grande que la première distance.

La troisième distance peut être au moins environ 50% plus grande que la première distance.

La poignée peut permettre à la main d'un utilisateur de glisser entre la portion de poignée parallèle à la direction de rainurage et une portion de poignée perpendiculaire à la direction de rainurage.

L'invention concerne une rainureuse comprenant une poignée fixée à un corps principal, la poignée permettant à la main d'un utilisateur de glisser entre une portion de poignée parallèle à une direction de rainurage et une portion de poignée perpendiculaire à la direction de rainurage.

Les inventeurs ont été surpris de constater à quel point cet arrangement était facile à manipuler pendant le processus de rainurage.

L'invention concerne également une poignée, qui peut être destinée à être utilisée dans la rainureuse décrite ci-dessus.

La portion de poignée parallèle à la direction de rainurage peut être une première portion de préhension. La première portion de préhension peut s'étendre le long de la direction de rainurage du corps.

La portion de poignée perpendiculaire à la direction de rainurage peut être une deuxième portion de préhension. La deuxième portion de préhension peut être sensiblement perpendiculaire à la première portion de préhension.

La première portion de préhension et la deuxième portion de préhension de la poignée peuvent être reliées par une portion de liaison, par exemple une première portion de liaison. La première portion de liaison peut être sensiblement continue, par exemple de telle sorte qu'un utilisateur peut glisser, lors de l'utilisation, une main de la première portion de préhension à la deuxième portion de préhension sans relâcher la poignée.

L'invention concerne également une rainureuse comprenant une poignée fixée à un corps principal, la poignée comprenant une première portion de préhension s'étendant le long d'une direction de rainurage du corps et une deuxième portion de préhension sensiblement perpendiculaire à la première portion de préhension, dans laquelle la première portion de préhension et la deuxième portion de préhension de la poignée sont reliées par une première portion de liaison sensiblement continue de telle sorte qu'un utilisateur peut glisser, lors de l'utilisation, une main de la première portion de préhension à la deuxième portion de préhension sans relâcher la poignée.

L'invention concerne également une poignée destinée à être utilisée dans la rainureuse décrite ci-dessus, dans laquelle la poignée comprend une première portion de préhension destinée à s'étendre le long d'une direction de rainurage du corps principal et une deuxième portion de préhension sensiblement perpendiculaire à la première portion de préhension, dans laquelle la première portion de préhension et la deuxième portion de préhension de la poignée sont reliées par une première portion de liaison sensiblement continue de telle sorte qu'un utilisateur peut glisser, lors de l'utilisation, une main de la première portion de préhension à la deuxième portion de préhension sans relâcher la poignée.

La poignée peut comprendre une troisième portion de préhension. La troisième portion de préhension peut être sensiblement perpendiculaire à la première portion de préhension. La troisième portion de préhension peut être reliée à la première portion de préhension par une deuxième portion de liaison. La poignée peut être sensiblement en forme de U.

Plus précisément, la poignée peut comprendre une troisième portion de préhension sensiblement perpendiculaire à la première portion de préhension et reliée à celle-ci par une deuxième portion de liaison, de sorte que la poignée est sensiblement en forme de U.

Plus précisément, la portion de préhension qui est sensiblement parallèle à la direction de rainurage du corps peut comprendre une première portion de préhension, la poignée comprenant une deuxième portion de préhension sensiblement perpendiculaire à la première portion de préhension, reliée à celle-ci par une première portion de liaison, et une troisième portion de préhension sensiblement perpendiculaire-à la première portion de préhension et reliée à celle-ci par une deuxième portion de liaison, de sorte que la poignée est sensiblement en forme de U.

L'invention concerne également une rainureuse comprenant une poignée fixée à un corps principal, la poignée comprenant une première portion de préhension s'étendant le long d'une direction de rainurage du corps, une deuxième portion de préhension sensiblement perpendiculaire à la première portion de préhension et une troisième portion de préhension sensiblement parallèle à la deuxième portion de préhension et espacée de celle-ci, de sorte que la poignée est sensiblement en forme de U.

L'invention concerne également une poignée destinée à être utilisée dans la rainureuse décrite ci-dessus, dans laquelle la poignée comprend une première portion de préhension destinée à s'étendre le long d'une direction de rainurage du corps principal, une deuxième portion de préhension sensiblement perpendiculaire à la première portion de préhension et une troisième portion de préhension sensiblement parallèle à la deuxième portion de préhension et espacée de celle-ci, de sorte que la poignée est sensiblement en forme de U.

La poignée peut être reliée à un côté du corps principal, par exemple à une extrémité libre d'au moins une, par exemple de chacune, de la deuxième portion de préhension et de la troisième portion de préhension. La première portion de préhension peut être alignée avec le corps principal.

Plus précisément, la poignée peut être reliée à un côté du corps principal à une extrémité libre de chacune de la deuxième portion de préhension et de la troisième portion de préhension, de sorte que la première portion de préhension est alignée avec le corps principal.

La deuxième portion de liaison de la poignée peut être reliée au corps principal. Au moins une ou chaque extrémité de la troisième portion de préhension de la poignée peut être reliée au corps principal.

Plus précisément, la deuxième portion de liaison de la poignée peut être reliée au corps principal de telle sorte que chaque extrémité de la troisième portion de préhension de la poignée est reliée au corps principal.

La troisième portion de préhension de la poignée peut dépasser le côté du corps principal auquel elle est reliée, par exemple plus loin que la deuxième portion de préhension. Cela peut permettre une préhension décalée de la poignée.

Plus précisément, la troisième portion de préhension de la poignée peut dépasser le côté du corps principal auquel elle est reliée, plus loin que la deuxième portion de préhension, afin de permettre une préhension décalée de la poignée.

La deuxième portion de liaison peut s'étendre à un angle aigu par rapport à la première portion de préhension et à la troisième portion de préhension.

La première portion de liaison peut s'étendre à un angle aigu par rapport à la première portion de préhension. La première portion de liaison peut s'étendre à un angle aigu par rapport à la deuxième portion de préhension.

Plus précisément, la première portion de liaison peut s'étendre à un angle aigu par rapport à la première portion de préhension et à la deuxième portion de préhension.

Dans certain exemples, la deuxième portion de liaison s'étend à un angle aigu par rapport à la première portion de préhension et à la troisième portion de préhension et la première portion de liaison s'étend à un angle aigu par rapport à la première portion de préhension et à la deuxième portion de préhension.

Au moins une partie d'au moins une des portions de préhension et/ou des portions de liaison de la poignée peuvent s'étendre à un angle aigu par rapport à la surface d'engagement, par exemple pour en faciliter la préhension par un utilisateur.

Plus précisément, la rainureuse peut comprendre une surface d'engagement pour engager un substrat à rainurer, dans laquelle au moins une partie d'au moins une des portions de préhension et/ou des portions de liaison de la poignée s'étend à un angle aigu par rapport à la surface d'engagement pour en faciliter la préhension par un utilisateur.

La première portion de préhension peut converger vers la surface d'engagement à mesure qu'elle s'étend à partir de la première portion de liaison.

La deuxième portion de préhension peut converger vers la surface d'engagement à mesure qu'elle s'étend à partir de la première portion de liaison.

La troisième portion de préhension peut converger vers la surface d'engagement à mesure qu'elle s'étend à partir de la deuxième portion de liaison.

La troisième portion de préhension peut être plus éloignée de la surface d'engagement que la deuxième portion de préhension.

La poignée peut être tubulaire. La poignée peut comprendre une paroi sensiblement continue. La paroi sensiblement continue peut être formée en tant que structure unitaire, par exemple par extrusion-soufflage.

Plus précisément, la poignée peut être tubulaire et comprendre une paroi sensiblement continue formée en tant que structure unitaire, par exemple formée par extrusion-soufflage.

L'invention concerne également une rainureuse comprenant une poignée tubulaire fixée à un corps principal, dans laquelle la poignée tubulaire comprend une paroi substantiellement continue formée en tant que structure unitaire, par exemple formée par extrusion-soufflage.

L'invention concerne également une poignée destinée à être utilisée dans la rainureuse décrite ci-dessus, dans laquelle la poignée est tubulaire et comprend une paroi sensiblement continue formée en tant que structure unitaire, par exemple formée par extrusion-soufflage.

La rainureuse peut comprendre un moteur sans balais, par exemple pour l'entraînement d'un disque de coupe. Le moteur sans balais peut se trouver entre la poignée et la ou une surface d'engagement pour l'engagement d'un substrat à rainurer.

Plus précisément, la rainureuse peut comprendre un moteur sans balais pour l'entraînement d'un disque de coupe, le moteur sans balais se trouvant entre la poignée et la ou une surface d'engagement pour l'engagement d'un substrat à rainurer.

La rainureuse peut comprendre une rainureuse mural.

Pour éviter tout doute, toutes les caractéristiques décrites ici s'appliquent également à tout aspect de l'invention.

Dans le cadre de la présente demande, il est expressément prévu que les divers aspects, modes de réalisation, exemples et alternatives exposés dans les paragraphes précédents, dans les revendications et/ou dans la description et les dessins suivants, et en particulier les caractéristiques individuelles de ceux-ci, peuvent être pris indépendamment ou dans n'importe quelle combinaison. En d'autres termes, tous les modes de réalisation et/ou les caractéristiques de tout mode de réalisation peuvent être combinés de n'importe quelle manière, à moins que ces caractéristiques ne soient incompatibles.

Pour éviter toute ambiguïté, les termes "peut", "et/ou", "par exemple", et tout autre terme similaire utilisés dans le présent document doivent être interprétés comme non limitatifs, de sorte que toute caractéristique ainsi décrite ne doit pas nécessairement être présente. En effet, toute combinaison de caractéristiques optionnelles est expressément envisagée sans s'écarter de la portée de l'invention, que celles-ci soient ou non expressément revendiquées. Le demandeur se réserve le droit de modifier toute revendication déposée à l'origine ou de déposer toute nouvelle revendication en conséquence, y compris le droit de modifier toute revendication déposée à l'origine pour qu'elle dépende de et/ou incorpore toute caractéristique de toute autre revendication bien qu'elle ne soit pas revendiquée à l'origine de cette manière.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 illustre une vue en perspective d'une rainureuse selon un exemple, vue de l'arrière ;
[Fig. 2] la figure 2 illustre une vue en perspective latérale de la rainureuse de la figure 1 ;
[Fig. 3] la figure 3 illustre une vue de dessus de la rainureuse des figures 1 et 2 ;
[Fig. 4] la figure 4 illustre une vue de face de la rainureuse des figures 1 à 3 ;
[Fig. 5] la figure 5 illustre une vue arrière de la rainureuse présentée aux figures 1 à 4 ;
[Fig. 6] la figure 6 illustre une vue latérale de la rainureuse présentée aux figures 1 à 5, vue d'un premier côté ;
[Fig. 7] la figure 7 illustre une vue latérale de la rainureuse des figures 1 à 6, vue d'un deuxième côté ; et
[Fig. 8] La figure 8 illustre une vue éclatée de la rainureuse des figures 1 à 7.

### Description détaillée de l'invention

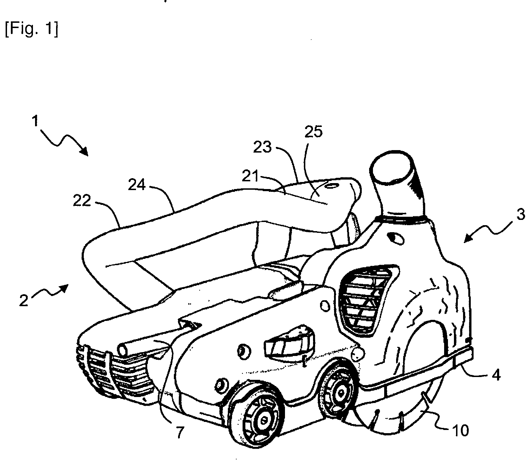

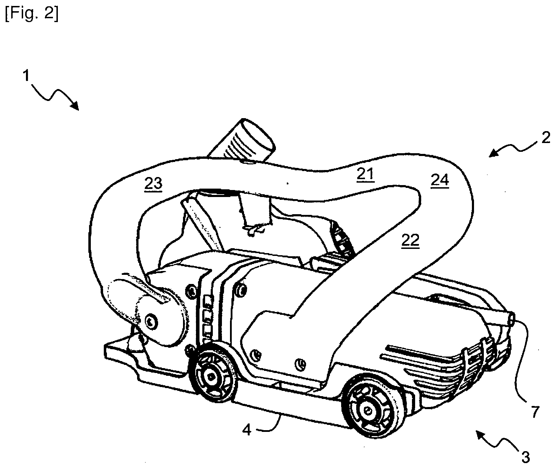

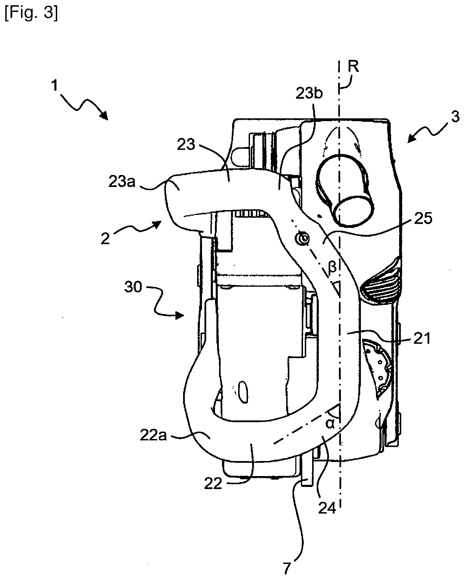

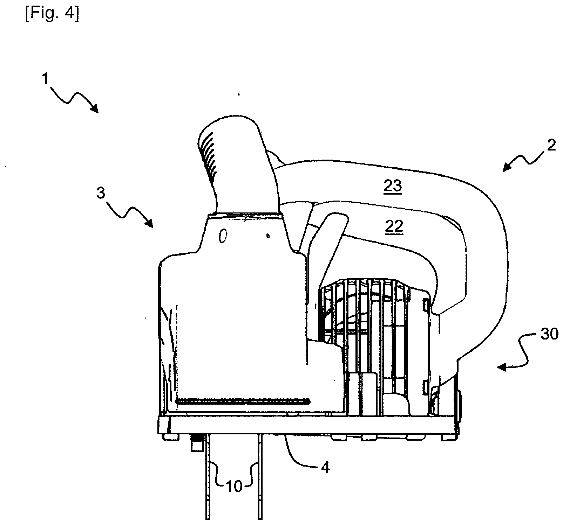

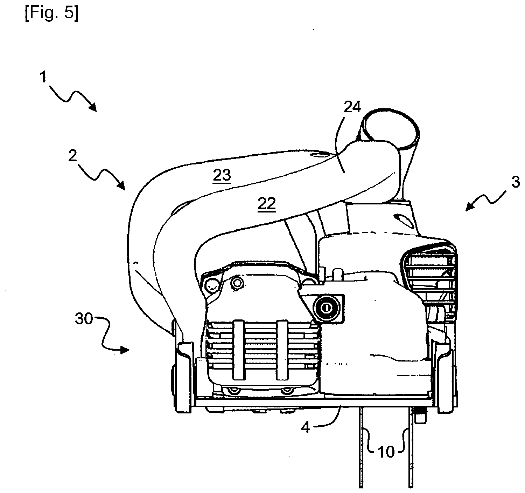

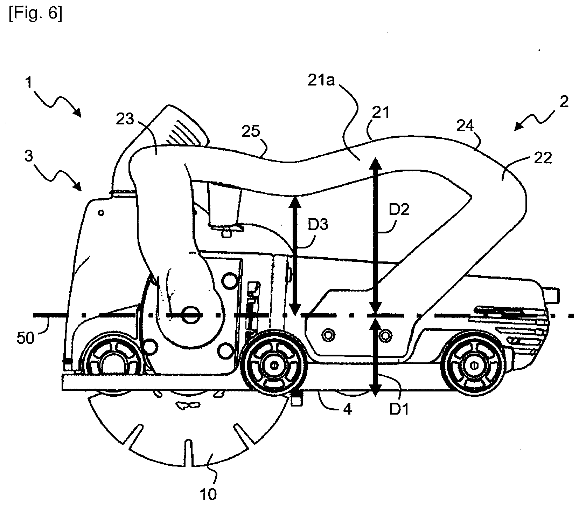

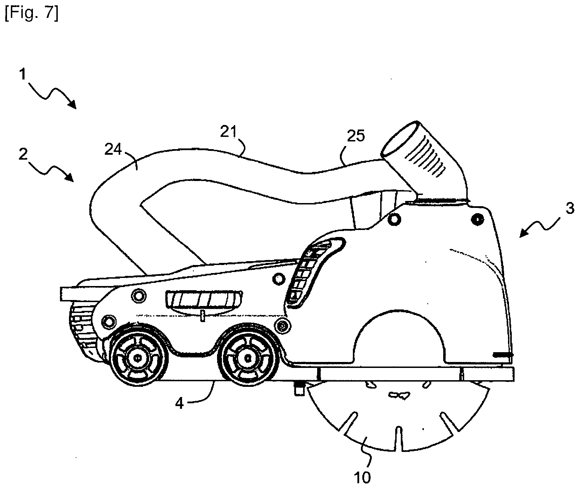

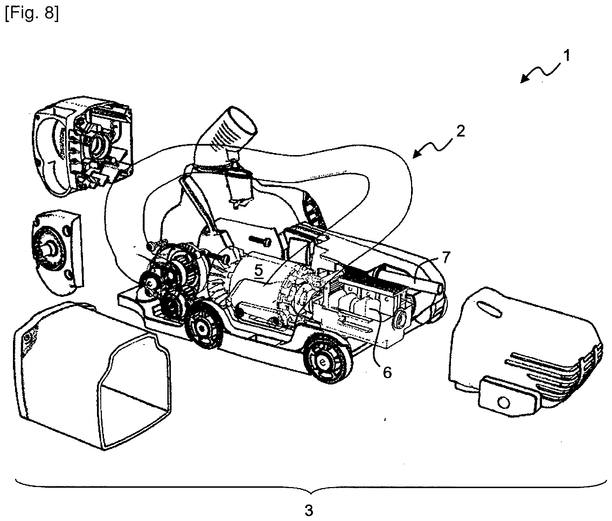

En se référant maintenant aux figures 1 à 8, on peut voir une rainureuse 1 comprenant une poignée 2 fixée à un corps principal 3. La poignée 2 comprenant une première portion de préhension 21 s'étendant le long d'une direction de rainurage du corps R et une deuxième portion de préhension 22 sensiblement perpendiculaire à la première portion de préhension 21. La première portion de préhension 21 et la deuxième portion de préhension 22 de la poignée 2 sont reliées par une première portion de liaison 24 sensiblement continue. Un utilisateur peut glisser, lors de l'utilisation, une main de la première portion de préhension 21 à la deuxième portion de préhension 21 sans relâcher la poignée 2.

La poignée 2 comprend également une troisième portion de préhension 23, qui est sensiblement perpendiculaire à la première portion de préhension 21. La troisième portion de préhension 23 est reliée à la première portion de préhension 21 par une deuxième portion de liaison 25, de sorte que la poignée 2 est sensiblement en forme de U.

La poignée 2 est aussi reliée à un côté 30 du corps principal 3 à une extrémité libre 22a, 23a de chacune de la deuxième portion de préhension 22 et de la troisième portion de préhension 23. Ainsi, la première portion de préhension 21 est alignée avec le corps principal 3.

La deuxième portion de liaison 25 de la poignée 2 est reliée au corps principal 3 de telle sorte que chaque extrémité 23a, 23b de la troisième portion de préhension 23 de la poignée 2 est reliée au corps principal 3. La troisième portion de préhension 23 de la poignée 2 dépasse le côté 30 du corps principal 3 auquel elle est reliée, plus loin que la deuxième portion de préhension 22, afin de permettre une préhension décalée de la poignée 2.

La deuxième portion de liaison 25 s'étend à un angle aigu β par rapport à la première portion de préhension 21 et à la troisième portion de préhension 23. La première portion de liaison 24 peut s'étendre à un angle aigu α par rapport à la première portion de préhension 21 et à la deuxième portion de préhension 22.

La rainureuse 1 comprend une surface d'engagement 4 pour engager un substrat à rainurer.

Au moins une partie d'au moins une des portions de préhension 21, 22, 23 et/ou des portions de liaison 24, 25 de la poignée 2 peuvent s'étendrent à un angle aigu par rapport à la surface d'engagement 4 pour en faciliter la préhension par un utilisateur.

Dans cet exemple, la première portion de préhension 21 converge vers la surface d'engagement 4 à mesure qu'elle s'étend à partir de la première portion de liaison 24. La deuxième portion de préhension 22 converge également vers la surface d'engagement 4 à mesure qu'elle s'étend à partir de la première portion de liaison 24. La troisième portion de préhension 23 converge aussi vers la surface d'engagement 4 à mesure qu'elle s'étend à partir de la deuxième portion de liaison 25. La troisième portion de préhension 23 est plus éloignée de la surface d'engagement 4 que la deuxième portion de préhension 22.

La première portion de préhension 21 et la deuxième portion de préhension 22 de la poignée 2 sont reliées par une première portion de liaison 24 sensiblement continue. Un utilisateur peut glisser, lors de l'utilisation, une main de la première portion de préhension 21 à la deuxième portion de préhension 21 sans relâcher la poignée 2.

L'invention propose donc une poignée qui facilite la manipulation de la rainureuse pendant le processus de rainurage.

Dans cet exemple, la poignée 2 est tubulaire et comprend une paroi sensiblement continue formée en tant que structure unitaire, par exemple formée par extrusion-soufflage.

La rainureuse comprend un moteur sans balais 5 pour l'entraînement d'une paire de disques de coupe espacée 10. La rainureuse comprend également un convertisseur de puissance 6 et un cordon d'alimentation 7 pour connecter le moteur sans balais 5 à une alimentation CA externe par l'intermédiaire du convertisseur de puissance 6.

La poignée 2 comprend une première portion de préhension 21 destinée à s'étendre le long d'une direction de rainurage du corps principal R et une deuxième portion de préhension 22 sensiblement perpendiculaire à la première portion de préhension 21.

Le moteur 5 a un axe central 50 éloigné de la surface d'engagement 4 d'une première distance D1. La portion de préhension 21 a une portion centrale 21a éloignée de l'axe central 50 d'une deuxième distance D2 qui est environ le double de la première distance D1. La partie de la portion de préhension 21 la plus proche de l'axe central 50 est éloignée de celui-ci d'une troisième distance D3. La qui troisième distance D3 est environ 50% plus grande que la première distance D1.

Toutefois, il est envisagé que la deuxième distance D2 soit inférieure au double de la première distance D1, mais qu'elle soit au moins 50% supérieure à la première distance D1. De même, il est envisagé que la deuxième distance D2 soit inférieure 50% plus grande que la première distance D1, mais qu'elle soit au moins 25% supérieure à la première distance D1.

On obtient ainsi un dispositif dont le centre de gravité est nettement plus proche du substrat à rainurer que celui des rainureuses connues. Cela permet à la rainureuse d'être plus compacte et facilite sa manipulation par un utilisateur.

Dans toute la description, les mots "comprennent" et "contiennent" et leurs variations signifient "y compris mais non limité à", et ils ne sont pas destinés à (et n'excluent pas) d'autres parties, additifs ou composants entiers ou partiels. Dans toute la description, le singulier englobe le pluriel, à moins que le contexte ne l'exige autrement. En particulier, lorsque l'article indéfini est utilisé, la spécification doit être comprise comme envisageant la pluralité ainsi que la singularité, à moins que le contexte n'exige autre chose.

Les caractéristiques, nombres entiers, caractéristiques, composés ou groupes décrits en liaison avec un aspect, une réalisation ou un exemple particulier de l'invention doivent être compris comme étant applicables à tout autre aspect, réalisation ou exemple décrit dans le présent document, sauf incompatibilité avec celui-ci.

### Liste des signes de références

- 1: rainureuse
- 2: poignée
- 21: première portion de préhension
- 22: deuxième portion de préhension
- 22a: extrémité libre de la deuxième portion de préhension
- 23: troisième portion de préhension
- 23a: extrémité libre de la troisième portion de préhension
- 24: première portion de liaison
- 25: deuxième portion de liaison
- 3: corps principal
- 30: côté du corps principal
- 4: surface d'engagement pour engager un substrat à rainurer
- 5: moteur sans balais
- 50: axe central du moteur
- 6: convertisseur de puissance
- 7: cordon d'alimentation
- D1: première distance
- D2: deuxième distance
- D3: troisième distance
- R: direction de rainurage du corps
- β: angle par rapport au première et troisième portions de préhension
- α: angle par rapport au première et deuxième portions de préhension

## Revendications

1. Rainureuse (1) comprenant une paire de disques de coupe espacés (10) pour couper une rainure dans un substrat, un moteur sans balais (5) pour entraîner les disques de coupe (10), un convertisseur de puissance (6) et un cordon d'alimentation (7) configuré pour connecter le moteur sans balais (5) à une alimentation CA externe par l'intermédiaire du convertisseur de puissance (6).

2. Rainureuse selon la revendication 1 comprenant un corps principal (3), une poignée (2) fixée au corps principal (3) et une surface d'engagement (4) pour l'engagement d'un substrat à rainurer, dans laquelle les disques de coupe (10) font saillie de la surface d'engagement (4), la poignée (2) comprend une portion de préhension (21) qui est sensiblement parallèle à une direction de rainurage du corps (R) et le moteur sans balais (5) se trouve entre la portion de préhension (21) et la surface d'engagement (4).

3. Rainureuse selon la revendication 2, dans laquelle le moteur (5) a un axe central (50) éloigné de la surface d'engagement (4) d'une première distance (D1) et la portion de préhension (21) qui est sensiblement parallèle à la direction de rainurage du corps (R) a une portion centrale (21a) éloignée de l'axe central (50) d'une deuxième distance (D2) qui est au moins 50% plus grande que la première distance (D1).

4. Rainureuse selon la revendication 3, dans laquelle la deuxième distance (D2) est au moins 75% plus grande que la première distance (D1).

5. Rainureuse selon la revendication 3, dans laquelle la deuxième distance (D2) est au moins environ le double de la première distance (D1).

6. Rainureuse selon l'une quelconque des revendications 3 à 5, dans laquelle la portion de préhension (21) qui est sensiblement parallèle à la direction de rainurage du corps (R) converge vers la surface d'engagement (4).

7. Rainureuse selon la revendication 6, dans laquelle la partie de la portion de préhension (21) la plus proche de l'axe central (50) est éloignée de celui-ci d'une troisième distance (D3) qui est au moins 25% plus grande que la première distance (D1).

8. Rainureuse selon la revendication 7, dans laquelle la troisième distance (D3) est au moins 40% plus grande que la première distance (D1).

9. Rainureuse selon la revendication 7, dans laquelle la troisième distance (D3) est au moins environ 50% plus grande que la première distance (D1).

10. Rainureuse selon l'une quelconque des revendications 2 à 9, dans laquelle la portion de préhension (21) qui est sensiblement parallèle à la direction de rainurage du corps comprend une première portion de préhension (21), la poignée (2) comprenant une deuxième portion de préhension (22) sensiblement perpendiculaire à la première portion de préhension (21), reliée à celle-ci par une première portion de liaison (24), et une troisième portion de préhension (23) sensiblement perpendiculaire à la première portion de préhension (21) et reliée à celle-ci par une deuxième portion de liaison (25), de sorte que la poignée (2) est sensiblement en forme de U.

11. Rainureuse selon la revendication 10, dans laquelle la poignée (2) est reliée à un côté (30) du corps principal (3) à une extrémité libre (22a, 23a) de chacune de la deuxième portion de préhension (22) et de la troisième portion de préhension (23), de sorte que la première portion de préhension (21) est sensiblement alignée avec le corps principal (3).

12. Rainureuse selon la revendication 10 ou la revendication 11, dans laquelle la deuxième portion de liaison (25) s'étend à un angle aigu (β) par rapport à la première portion de préhension (21) et à la troisième portion de préhension (23) et la première portion de liaison (24) s'étend à un angle aigu (α) par rapport à la première portion de préhension (21) et à la deuxième portion de préhension (22).

13. Rainureuse selon l'une quelconque des revendications 10 à 12, dans laquelle la première portion de préhension (21) converge vers la surface d'engagement (4) à mesure qu'elle s'étend à partir de la première portion de liaison (24).

14. Rainureuse - selon la revendication 12 ou la revendication 13, dans laquelle la deuxième portion de préhension (22) converge vers la surface d'engagement (4) à mesure qu'elle s'étend à partir de la première portion de liaison (24).

15. Rainureuse selon l'une quelconque des revendications 12 à 14, dans laquelle la troisième portion de préhension (23) converge vers la surface d'engagement (4) à mesure qu'elle s'étend à partir de la deuxième portion de liaison (25).
